Europäisches Patentamt

European Patent Office

Office européen des brevets

(11) Publication number: **0 078 557**
A1

# (12) EUROPEAN PATENT APPLICATION

(21) Application number: 82201260.5

(22) Date of filing: 11.10.82

(51) Int. Cl.³: **H 02 K 29/02**, H 02 K 1/22

(30) Priority: 14.10.81 IT 6832281

(43) Date of publication of application: 11.05.83
Bulletin 83/19

(84) Designated Contracting States: **AT BE CH DE FR GB IT
LI NL SE**

(71) Applicant: **Guastadini, Fausto, Fraz. Tuffo Centro, 6,
I-14023 Cocconato (At) (IT)**

(72) Inventor: **Guastadini, Fausto, Fraz. Tuffo Centro, 6,
I-14023 Cocconato (At) (IT)**

(74) Representative: **Lotti, Giorgio, c/o Ing. Barzanò &
Zanardo Milano S.p.A. Via Cernaia 20, I-10122 Torino (IT)**

(54) Direct current electrical machine, without brush, with a permanent magnet rotor.

㊼ A direct current electrical machine, without brush, provided with an open annular permanent magnet rotor (26) of tapered cross-section (27, 28); the rotor (26) is keyed on to a shaft (12) which is rotatably supported by the machine casing (10); the rotor (26) is located in a position corresponding both with at least two coils, namely an extraction coil (23) and an acceleration coil (22), and with a stator (25); by means of electronic circuits (19, 20) operated by distribution cards (21) controlled by a disc or membrane (15) keyed on to the shaft, pulses are fed to the coils (22, 23) which respectively rotate the rotor (26) to remove it from its equilibrium position relative to the stator (25), and cause its rotation to proceed further when it leaves the influence of the extraction coil (23), until the new equilibrium position; a direct current supply (16) is fed to the machine components.

ACTORUM AG

EP 0 078 557 A1

0078557

## DESCRIPTION

The invention relates to a direct current electrical machine, without brush, with a permanent magnet rotor. More particularly, the invention relates to a direct current electrical machine in which the rotor is represented solely by an element constituted by a permanent magnet with no winding. Furthermore, the rotor constituted in this manner comprises neither a commutator, which is usually connected to the armature constitutung the rotor, nor the so-called brushes carried by the conventional commutator.

Schematically, conventional direct current electrical machines are constituted by a stator and a rotor, both of iron. Generally the stator carries the field windings and the rotor carries the armature windings.

The stator nearly always constitutes the outer part of the machine, and is generally formed from a ring, towards the inside of which there project the poles, each provided with copper exciting windings.

The stator, which is usually large because of the direct current excitation, is a rolled iron cylinder keyed on to a shaft resting on supports. Cavities are provided in the peripheral zone of the rotor close to the iron gap, to house the armature winding. This is connected by conductors to a cylindrical com mutator comprising segments insulated from each other and also mounted on the shaft. Brushes rest on the outer surface of the cyinder, and are connected to conductors which lead to the machine terminals.

The operation of this conventional machine will not be described, as it is known to all experts of the art.

As. can be seen, this machine requires various components, of which the most delicate constructionally are the rotor provided with its winding, the commutator comprising copper segments in sulated from each other, and the brushes which are cibstituted by blocks of conducting material.

All this implies careful machining of the various components, a fairly high cost thereof, and constant maintenance of the machine in order to ensure that each component is kept always in perfectly effective so as not to lower the machine efficiency.

The invention proposes a direct current electrical machine of new design which firstly dispenses with the commutator and its brushes, and secondly dispenses with windings of any kind on the rotor, leading to a consequent undoubted saving in mate rials, in component assembly, and in maintenance which is redu ced to simple programmed checks on a machine of high reliability.

0078557

As will be seen, a further considerable advantage of the proposed machine is that it provides a useful rotation of its constituent rotor of about 250°, which does not happen in conventional electric motors and which enables a greater rotational speed of the rotor, i.e. a greater r.p.m., to be attained without any danger of overheating or burning the motor. This is obtained by utilising a particular geometrical configuration of the rotor and of the relevant electromagnetic field which will be described hereinafter.

There objects are attained according to the invention by a direct current electrical machine, without brush, with a permanent magnet rotor, characterised by comprising a casing in which there is rotatably mounted a shaft on which there is keyed a permanent magnet rotor of open annular configuration which tapers from one end to the other, the rotor being contained between at least two coils with iron cores, each coil being supplied by electronic means which receive commands from members which distribute pulses to the coils, a power supply being provided for feeding direct current to said electronic means and to said distribution members.

The machine is described hereinafter by way of nonlimiting example with reference to the accompanying drawings in which:

Figure 1 is an axial front section through the machine according to the invention;

Figure 2 and 3 are sections on the line II-II of Figure 1,

0078557

in two different operating positions;

Figure 4, 5 and 6 are views of an element of the machine sho wing three possible configurations.

The machine is illustrated in the figures diagrammatically, i.e. in terms of its essential members without frameworks, sup portts or housings, as these vary in overall dimension accor ding to the motor to be constructed.

A shaft 12 is mounted on bearings 11 in a casing 10, and has one end 13 connected to a user member and the other end 14 car rying an activation disc 15, the purpose of which is described hereinafter.

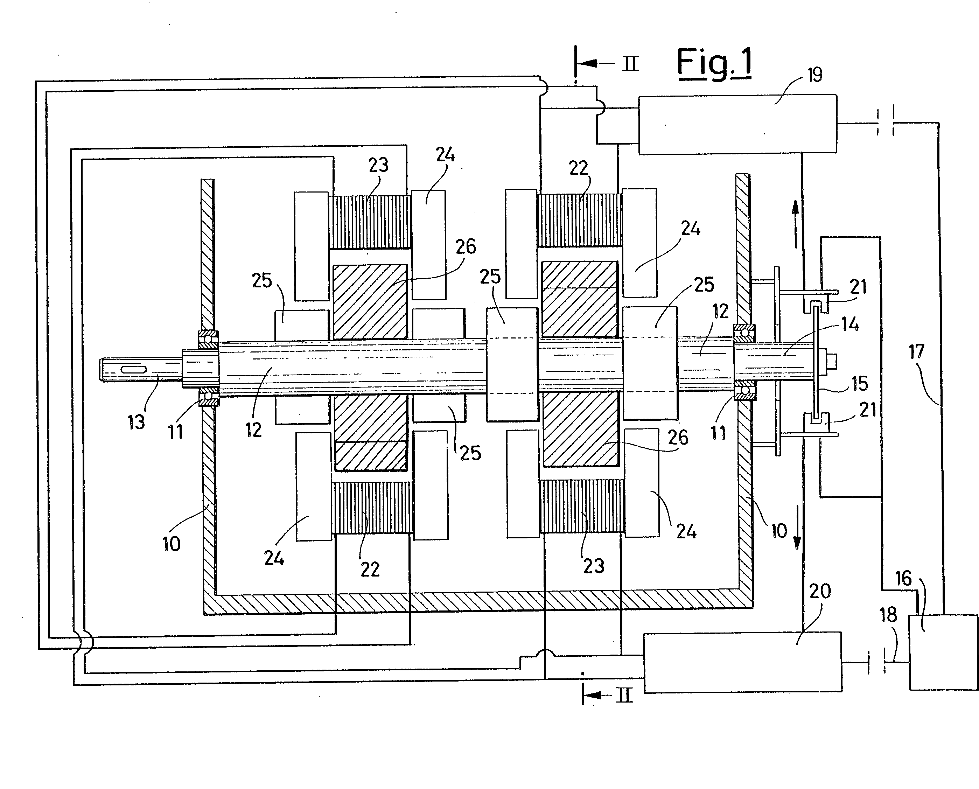

The current from a direct current supply 16 passes through conductors 17 and 18 respectively to two electronic circuits 19 and 20 upstream of the machine, each of which has respectively the function supplu two coils 22 known as acceleration coils and two coils 23 known as extraction coils, by way of respecti ve conductors illustrated diagrammatically in Figure 1. Each coil is winded up a core 24 at its sides in known manner, and is mounted on the machine casing in a manner not shown.

The two electronic circuits 19 and 20 are actived by two di stribution cards 21 mounted on the periphery of the machine ca sing in diametrically opposed position.

The stators 25, having a field intensity matched to the ro tors, are mounted in the casing.

0078557

Figure 1 shows a machine constituted by two motor blocks, this being the reason why each circuit controls two respective coils, however if must be emphasised that such a case is descri bed purely by way of example for simplicity of description, in that the number of blocks can vary from one upwards, depending entirely on the performance and power required.

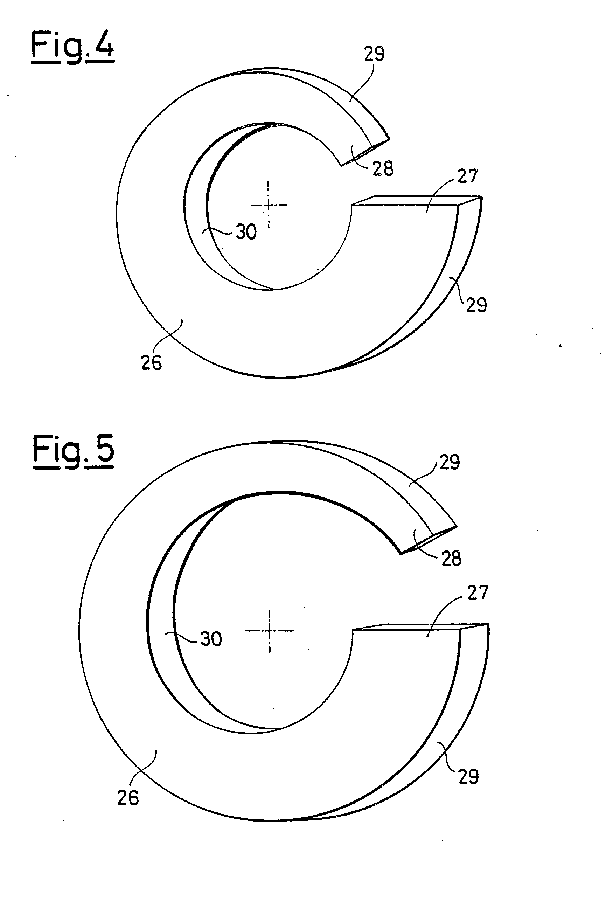

Thr rotors 26 are keyed on the shaft 12 between one or more stators 25 and coils 22 and 23 in the manner illustrated in Fi gure 1. The shape of each rotor 26 in clearly visible in Figures 4, 5 and 6. In figures 4 and 5 these are open annular permanent magnets having a ray angularly tapered, such that the maximum section is obtained at one end 27, while the minimum section is obtained at the other end 28.

As can be seen from Figure 4 and 5, the magnet 26 can be ta pered either by removing material from its outer surface 29 (Figure 4) or from its inner surface 30 (Figure 5).

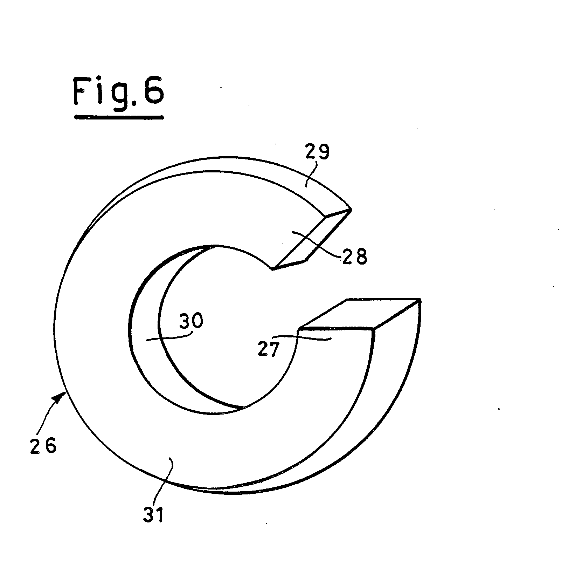

In Figure 6, however, there is tapered the thickness 29, and this can be obtained either by removing material from a surface 31 or from both the surfaces 31, and also, from the thickness 29 and 30, both or only ine of them. The solution of figure 6, requires that the two coils 22 and 23 must be mounted in order that the flux of their magnetic field is not more an axial flux but a radial flux.

In should also be noted that for assembly reasons, in wha-. tever solution of figures 4,5 and 6, corresponding caunterbalance

0078557

is fitted to the surface from which material is moved, because the rotors must be balanced dynamically, i.e. they must have the barycentre on the longitudila axis of symmetry of the shaft

- 12 ,otherwise during rotation considerable unbalance would ari se, and this would be inadmissible. The taper can obviously al so be equal on both surfaces, and this would require double ba lancingn both internal and external.

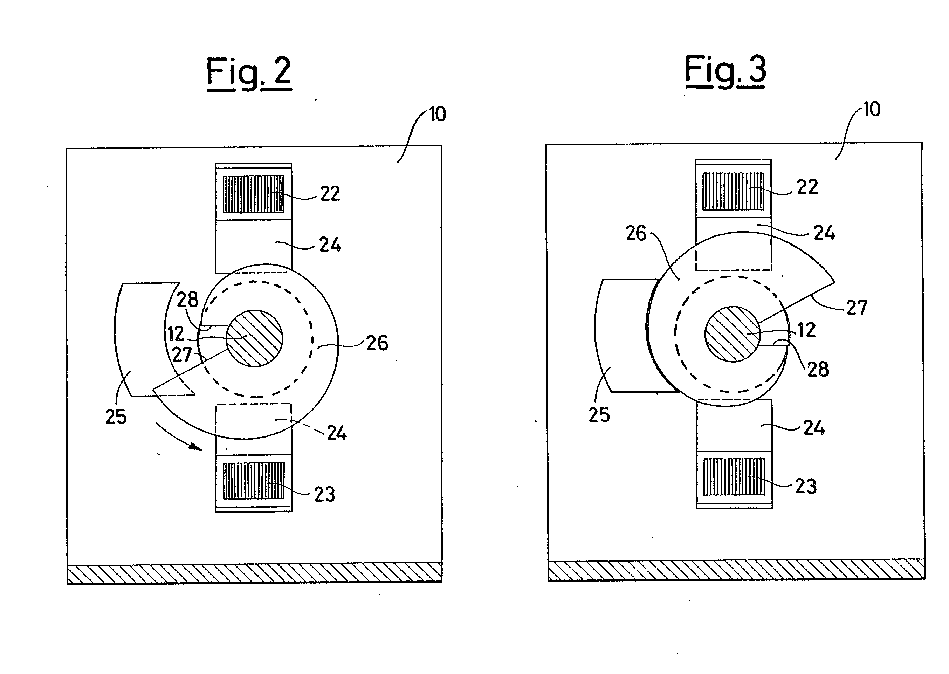

It will be noted that the balancing block is not shown either in Figures 2 and 3 or in Figures 4,5and 6 for reasons of simplici ty , and again for reasons of simplicity Figure 1 shows each ro tor with an equal radial extension on the two sides of the shaft, i.e. as if balancing had already been applied to the magnet block so as to for a single block.

The operation of the machine heretofore described is as follows.

The current flows from the pcwer supply 16 to the two electronic circuits 19 and 20. These are not described in detail as they can be constructed in various ways according to the constructional requirements of the machine. :          They comprise diodes and transistors, and their purpose is to respec tively supply the extraction coil 23 and the acceleration coil 22. The electronic circuits 19 and 20 are controlled by a pulse signal generated by the cards 21, operated by the actuator 16, which survey the angular position of the rotor 26, through the

disc or membrane 15,keyed on one end 14 of the shaft 12.

0078557

The rotation of the permanent magnet 26 is illustrated in Figures 2 and 3, of which Figure 2 shows an equilibrium position in which the end 28 of minimum surface is opposite the stator 25.

If a pulse now reaches the extraction coil 23, the rotor 26 rotates in the direction of the arrow by the repulsion effect which arises, and finally attains the position of Figure 3 in which the electronic circuit 19 feeds the acceleration coil 22, which causes the rotation of the rotor to proceed until it returns to its previous position.

This particular configuration of electromagnetic field permits that two magnetised bodies are withdrawn from each other not in the direction opposite the direction of their attraction, and thus with a certain traction force, but along their straight tangency line, and thus with lesser traction force.

There are thus useful angles in which it is required a low force to rotate the rotor 26.

In the case illustrated, each rotor has one acceleration coil 22 and one extraction coil 23 disposed diametrically oppo-site each other about the rotor, but it would be more advantageous to mount two or more acceleration coils 22, for example at 90° to each other (if two in number) or at 60° to each other (if three in number) in order to provide pulses to the rotor at a greater frequency during its rotation, and thus increase its speed and power. It is necessary only to modify the circuit 19 in order to obtain correct operation for the coils 22.

Alternatively, it is possible to construct the machine by removing the stators 25 and reversing the magnetic field furnished by the coils 22 and 23, in order to generate a polarity of opposite sign between core 24 and rotor 26.

Laboratory tests have shown that this motor is not subject to overheating or to the danger of any of its components burning. Moreover, if one or more components of a multi-rotor motor become damaged, the motor still continues to operate even through at reduced speed. Whatever the form and structure of the machine, the stators, if present, must obviously be disposed in positions corresponding with the maximum magnetised part of the rotor.

Finally, its constructional simplicity makes it extremely reliable, and eliminates the risk of fracture or faults in its constituent members, and it can therefore be constructed in any size for the most widespread applications.

0078557

CLAIMS

1. A direct current electrical machine, whithout brush, with a permanent magnet rotor, characterised by comprising a casing (10) in which there is rotatably mounted a shaft (12) on which there is keyed a permanent magnet rotor (26) of open annular configuration which tapers from one end (27) to the other (28), the rotor (26) being contained between at least two coils (22,23), with iron cores, each coil being supplied by electronic means (19,20) which receive commands from members (21) which distribute pulses to the coils (22,23), a power supply (16) being provided for feeding direct current to said electronic means (19,20) and to said distribution members (21).

2. Machine as claimed in claim 1, characterised in that the rotor (26) is also contained between statoric elements (25).

3. A machine as claimed in claims 1 and 2, characterised in that to each rotor (26) there is coupled at least one extraction coil (23) which causes its rotation to proceed when the rotor is at its equilibrium point relative to the stator (25) and at least one acceleration coil (22) which causes its rotation to further proceed when the rotor is no longer influenced by the extraction coil (23) following asid initial rotation.

4. A machine as claimed in claim 1, characterised in that the electronic means (19,20) consist of two circuits connected respectively to the acceleration (22) and extraction (23) coils, and supplied by curren (16) and controlled by the distribution (21) members.

5. A machine as claimed in claims 1 and 4, characterised in that the distribution members (21) are elctronic cards disposed in positions corresponding with an activation disc or membrane (15) keyed on to one end of the shaft (12) generating an electric signal proportional to the angular position of the shaft (12).

1/4

0078557

Fig.3

Fig.2

<u>Fig.4</u>

<u>Fig.5</u>

0078557

## Fig.6

# 0078557

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | H 02 K 29/02 |
| Y | US-A-3 529 220 (KAZUTSUGU KOBAYASHI et al.) * column 2, lines 25-33 * | 1 | H 02 K 1/22 |
| | --- | | |
| Y | DE-C- 251 599 (SVEND DYHR) * claim 7 * | 1 | |
| | --- | | |
| A | US-A-3 679 953 (B.D. BEDFORD) * column 2, line 60-column 4, line 8 * | | |
| | ----- | | |

**TECHNICAL FIELDS SEARCHED (Int. Cl. ³)**

H 02 K 1/00
H 02 K 29/00
H 02 P 6/00

The present search report has been drawn up for all claims

| Place of search BERLIN | Date of completion of the search 12-01-1983 | Examiner GESSNER E A F |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82